Europäisches Patentamt

European Patent Office

Office européen des brevets

(19)

(11) Veröffentlichungsnummer : **0 086 267**
**B1**

(12) **EUROPÄISCHE PATENTSCHRIFT**

(45) Veröffentlichungstag der Patentschrift :
**15.05.85**

(21) Anmeldenummer : **82111273.7**

(22) Anmeldetag : **06.12.82**

(51) Int. Cl.⁴ : **E 05 F 15/06**, E 05 F 15/00

(54) **Elektropneumatische Türsteuerung.**

(30) Priorität : **12.02.82 DE 3205091**

(43) Veröffentlichungstag der Anmeldung :
**24.08.83 Patentblatt 83/34**

(45) Bekanntmachung des Hinweises auf die Patenterteilung : **15.05.85 Patentblatt 85/20**

(84) Benannte Vertragsstaaten :
**AT CH DE FR GB IT LI SE**

(56) Entgegenhaltungen :
**WO-A-81 /018 31**
**WO-A-81 /018 32**
**DE-A- 2 928 801**
**DE-A- 3 003 877**

(73) Patentinhaber : **WABCO Westinghouse Fahrzeugbremsen GmbH
Am Lindener Hafen 21 Postfach 91 12 80
D-3000 Hannover 91 (DE)**

(72) Erfinder : **Gudat, Wolfgang
Stollenweg 1
D-3000 Hannover 91 (DE)**
Erfinder : **Liermann, Peter
Am Kucksberg 19
D-3013 Barsinghausen (DE)**
Erfinder : **Binarsch, Jürgen
Am Eichkamp 18
D-3051 Haste (DE)**

(74) Vertreter : **Schrödter, Manfred
WABCO Westinghouse Fahrzeugbremsen GmbH Am
Lindener Hafen 21 Postfach 91 12 80
D-3000 Hannover 91 (DE)**

## Beschreibung

Die Erfindung bezieht sich auf eine elektropneumatische Türsteuerung gemäß dem Oberbegriff des Patentanspruchs 1.

Derartige z. B. aus der DE-A-2 928 801 bekannte Türsteuerungen werden hauptsächlich in öffentlichen Verkehrsmitteln, die der Personenbeförderung dienen, wie z. B. in Omnibussen verwendet. Die Steuerungen werden elektropneumatisch betätigt, d. h. der Fahrer löst zum Öffnen oder zum Schließen der Tür elektrischen Impuls aus, welcher über ein als Steuerventil ausgebildetes elektro-pneumatisches Türventil einen als Türzylinder ausgebildeten Türantrieb mit Druckluft beaufschlagt, wobei die Hubbewegungen des Türzylinderkolbens die Öffnungs- und Schließbewegungen der Tür auslösen.

Da mit den verschiedensten Betriebsbedingungen, insbesondere auch mit Fehlbedienungen durch die Fahrgäste, gerechnet werden muß, hat die Steuerung eine Reihe von Randbedingungen zu erfüllen. So wird z. B. allgemein verlangt, daß die Schließbewegung einer pneumatisch betätigten Fahrzeugtür automatisch in eine Öffnungsbewegung umschaltet, wenn Personen oder Gegenstände von einer sich schließenden Tür eingeklemmt werden (Reversierung). Dies gilt auch für erschwerte Betriebsbedingungen, welche z. B. im Winterhalbjahr auftreten, wenn durch die niedrigen Temperaturen die Kinematik der Tür verändert wird und wenn durch Schnee und Eisbrocken die Schließbewegung der Tür behindert werden kann. Da auch bei der Öffnungsbewegung die Gefahr besteht, daß Personen oder Gegenstände eingeklemmt werden können, ist es weiter üblich, eine derartige Einrichtung auch für die sich öffnende Tür vorzusehen. Dabei bringt eine elektropneumatische Schalteinrichtung die Tür lediglich durch Entlüften der Anlage zum Stillstand, da hier die Umkehrung der Türbewegung eine Gefahr für die nachfolgend durch die Tür tretenden Personen bedeuten würde.

Eine derartige Türsteuerung ist z. B. in der nicht vorveröffentlichten DE-A-30 32 516 vorgeschlagen worden. Die dort beschriebene Anlage weist zur Sensierung der Türstellungen und des Türverhaltens, z. B. des Auflaufens auf Hindernisse, mehrere elektrische Endschalter sowie elektropneumatische Differenzdruckshalter auf. Wie alle beweglichen mechanischen Teile sind diese Schalter verschleißanfällig. Außerdem sind die Anbringung und Justage der Endschalte und die Druckeinstellung der Differenzdruckschalter problematisch.

Es ist weiter bereits bekannt (DE-A-30 03 877), die Bewegung von Fahrzeugtüren dadurch zu überwachen, daß bestimmte Zeitabschnitte vorgegeben werden, innerhalb derer die sich schließende oder öffnende Tür eine bestimmte Stellung erreicht haben soll. Dabei werden die einzelnen Stellungen der Tür durch Reedschalter oder Lichtschranken abgefühlt. Erreicht die Tür infolge eines Einklemmvorganges eine dieser Stellungen nicht rechtzeitig, so wird der Reversiervorgang ausgelöst oder der Bewegungsablauf stillgesetzt. Der jeweilige Vergleich von Türstellung und abgelaufener Zeit erfolgt in einer Elektronik, die in diskreter Logik aufgebaut ist und im wesentlichen Zeitglieder enthält.

Ein Nachteil dieser bekannten Türsteuerung liegt darin, daß relativ viele Reedschalter bzw. Lichtschranken benötigt werden, wenn ein schnelles Reagieren der Reversierung in allen Stellungen während des Türhubes erfolgen soll. Falls nämlich die Abtastung der Türbewegung zu grob erfolgt, vergeht relativ viel Zeit bis zum Einsetzen der Reversierung, wenn im ungünstigsten Fall das Behindern eines Türflügels am Beginn eines Überwachungszeitraumes erfolgt. Dies läßt sich zwar durch eine Erhöhung der Zahl der Reedschalter bzw. Lichtschranken verbessern. Hierdurch entstehen jedoch erhöhte Kosten für diese Bauteile und ebenso auch für die entsprechend erhöhte Zahl der Zeitglieder in der Elektronik. Ferner ist dann auch der Aufwand, der zur Zeiteinstellung der Zeitglieder bei nicht linearer Türbewegung benötigt wird, erheblich.

Ein weiterer Nachteil liegt darin, daß nach erfolgter Einstellung der Zeitglieder die Norm-Bewegung der Türflügel festliegt und sich nicht den in der Praxis vorkommenden wechselnden Betriebsbedingungen anpaßt. Diese können sich z. B. im Winterhalbjahr durch eine veränderte Kinematik der Tür so auswirken, daß die tatsächliche Bewegung gegenüber der Norm-Bewegung verlangsamt ist. Eine verlangsamte Bewegung kann auch nach einer Betätigung des Nothahnes vorliegen, wenn die Wiederbelüftung der Anlage zunächst gedrosselt erfolgt.

Der Erfindung liegt die Aufgabe zugrunde, eine Türsteuerung der eingangs genannten Art so zu verbessern, daß die o. g. Nachteile des Standes der Technik entfallen.

Diese Aufgabe wird durch die im Patentanspruch 1 enthaltene Erfindung gelöst. Die Unteransprüche enthalten zweckmäßige Ausgestaltungen und Weiterbildungen.

Die Erfindung wird im folgenden anhand eines Ausführungsbeispiels, das in einer Zeichnung dargestellt ist, näher erläutert. Es zeigen im Blockschaltbild :

Figur 1 eine Türsteuerung nach de nicht vorveröffentlichten DE-A-30 32 516,

Figur 2 eine Türsteuerung nach der Erfindung.

Die in Fig. 1 gezeigte Türsteuerung gemäß der o.g. DE-A-30 32 516 besteht im wesentlichen aus einem Druckluftvorrat 6, einem Nothahn 7, einem Absperrventil 8, einem Türventil 9 und zwei pneumatischen Türzylindern 4, 5. Die Druckräume der Türzylinder 4, 5 sind an elektropneumatische Differenzdruckschalter 13, 14 angeschlossen. Die Türzylinder 4, 5 sind mit je einem Flügel einer (nicht dargestellten) Fahrzeugtür verbunden.

Zum Erkennen der Endstellungen der Türflügel dienen Endschalter 11, 12. Die Umsteuerung der Tür durch den Fahrer erfolgt über einen Taster 10. Alle elektrischen Steuersignale zur Steuerung der Türanlage werden von einer Elektronik 3 erzeugt bzw. dieser zugeleitet.

Die genaue Wirkungsweise dieser Türanlage ist in der DE-A-30 32 516 ausführlich beschrieben.

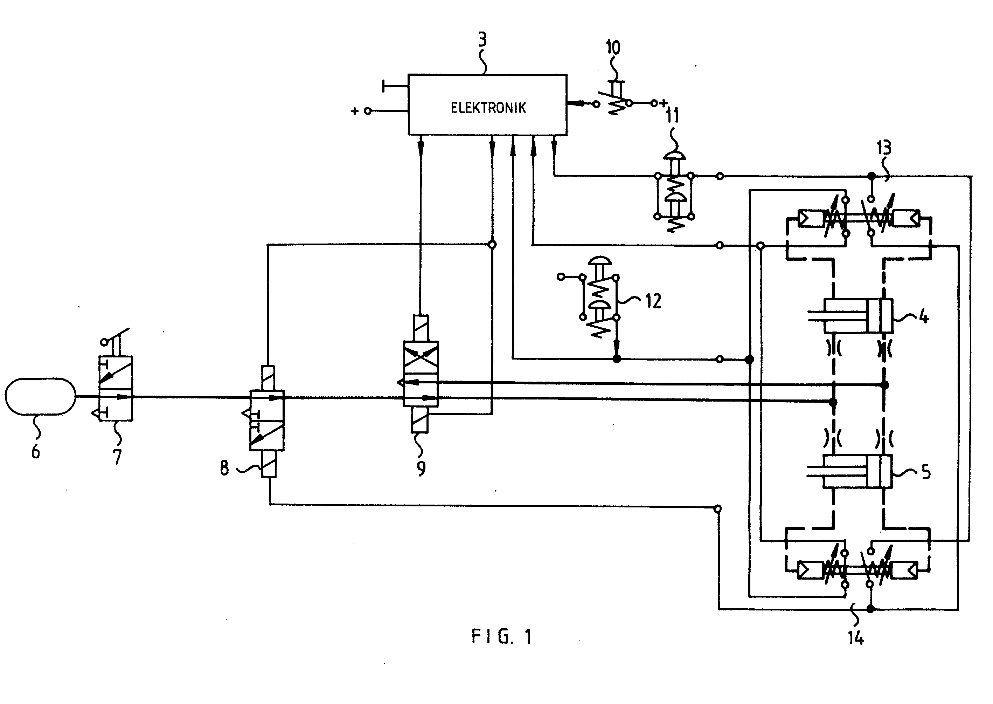

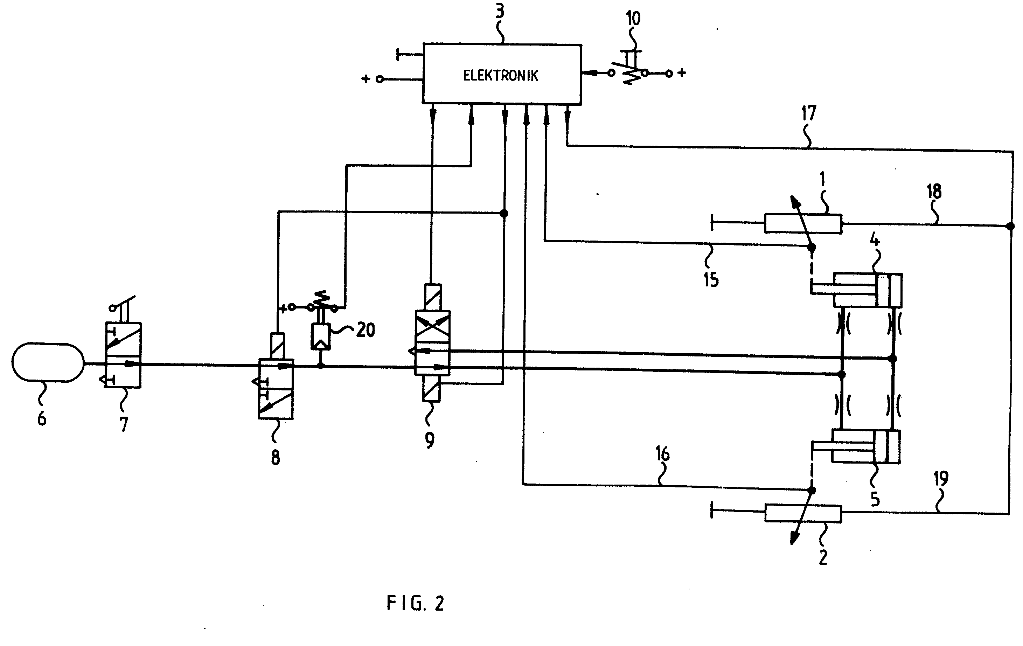

In Fig. 2 ist ein Ausführungsbeispiel der erfindungsgemäßen Türsteuerung dargestellt. Die Endschalter sowie die Differenzdruckschalter sind entfallen. Zum Erkennen der Stellungen und des Bewegungsverhaltens der Türflügel dienen jetzt zwei Linearweggeber 1, 2. Ein Schleifer dieser Weggeber ist jeweils an einer Kolbenstange eines Türzylinders 4, 5 angebracht. Die Linearweggeber werden aus einer Elektronik 3 über Leitungen 17, 18, 19 mit einer stabilisierten Versorgungsspannung (Konstantspannung) versorgt und sind am anderen Ende an Masse angeschlossen. Die Abgriffe bzw. Schliefer der Weggeber sind über Leitungen 15, 16 zur Elektronik 3 geführt. Die an den Leitungen 15, 16 liegende Spannung ist ein Maß für die jeweilige Stellung der Türflügel.

Anstelle von Linearpotentiometern können auch Drehpotentiometer angewendet werden, die auf einer Drehachse der Tür angebracht sind (nicht dargestellt). Die Weggeber können weiterhin zur Verlängerung der Lebensdauer auch berührungslos ausgebildet sein. Sie müssen jedoch ein analoges Ausgangssignal abgeben.

Wahlweise können die Weggeber 1, 2 auch über die Leitungen 15, 16 mit einem Konstantstrom versorgt werden. Hierbei entfallen die Leitungen 17, 18, 19 (nicht dargestellt). Die sich auf den Leitungen 15, 16 ausbildende Spannung wird in der Elektronik 3 erfaßt und ist ein Maß für die jeweilige Stellung der Türflügel.

Schließlich können die Weggeber 1, 2 auch über die Leitungen 17, 18, 19 mit einer Konstantspannung versorgt werden und gleichzeitig die Schleifer an Masse gelegt werden, so daß die Leitungen 15, 16 entfallen. Der sich dann einstellende Strom wird innerhalb der Elektronik 3 mittels eines Meßwiderstandes, der gleichzeitig zur Strombegrenzung dient, ausgewertet. Es ergibt sich ein Spannungssignal, dessen Nichtlinearität bei der weiteren Verarbeitung in der Elektronik berücksichtigt wird. Ein Konstantstrom-Generator wird dann nicht benötigt.

Aus den Signalen der Weggeber 1, 2 wird in der Elektronik 3 die Türstellung einschließlich der Endstellungen sowie nach Differenzierung auch die Türflügelgeschwindigkeit und -beschleunigung bzw. -verzögerung ermittelt. Die Elektronik 3 enthält hierzu einen Rechner, z. B. einen Mikrocomputer.

Mit den ermittelten Größen wird dann der Lauf der Türflügel in beiden Richtungen überwacht. Treten durch Hindernisse Unregelmäßigkeiten im Türlauf vor Erreichen der Endstellungen auf, wird dies durch entsprechende unregelmäßige Geschwindigkeits- und Beschleunigungswerte von der Elektronik 3 erkannt.

Hierzu enthält der Rechner einen Speicher, in dem zu der jeweils erkannten Türstellung die zugehörige Norm-Türgeschwindigkeit enthalten ist. Bei einer zu großen Unterschreitung der Norm-Türgeschwindigkeit durch die tatsächliche Türgeschwindigkeit wird dann durch eine Logik eine sogenannte Überwachungsfunktion ausgelöst. Hierdurch wird die Tür bei einer Türschließung reversiert und bei einer Türöffnung drucklos gemacht. Damit ist ein feinfühliges Reagieren auf Hindernisse gewährleistet.

Gemäß einer Weiterbildung wird gleichzeitig die berechnete Verzögerung der Tür überwacht. Bei einem zu hohen Wert (Überschreiten einer Schwelle) wird wieder die Überwachungsfunktion ausgelöst. Dies hat den Vorteil, daß die Türbewegung noch sensibler überwacht werden kann. Eine alleinige Überwachung der Türverzögerung ist jedoch nicht ausreichend, da bei langsamer, schleichender Bremsung der Tür die Verzögerungsschwelle nicht erreicht werden könnte.

Neben der Verzögerung wird auch die Beschleunigung der Tür überwacht. Eine Beschleunigung in Öffnungs- oder Schließrichtung kommt dann vor, wenn die Tür von Hand geschoben oder gestoßen wird. Im Anschluß daran bleibt die Tür dann kurzzeitig stehen bzw. verzögert stark, bis sich der Druck in den Antriebszylindern entsprechend der Türstellung wieder aufgebaut hat und die Tür dann bis in die Endstellung weiterläuft. Weitere negative Folgen hat das Schieben bzw. Stoßen nicht. Es muß allerdings durch den Rechner erkannt werden, damit die Überwachungsfunktion, die sonst wegen falscher Türgeschwindigkeit und -verzögerung ansprechen würde, kurzzeitig unwirksam gemacht werden kann.

Eine andere Fehlbedienung durch die Fahrgäste ist das Auf- und Zuhalten der Tür im offenen bzw. geschlossenen Zustand. In diesem Fall wird durch den Rechner die Überwachungsfunktion ausgelöst, wenn nach einer bestimmten Zeit nach einer Umsteuerung, d. h. nach einer Betätigung des Tasters 10 durch den Fahrer, eine Mindestgeschwindigkeit der Tür nicht erreicht ist.

Bei einer ersten Inbetriebnahme der Türanlage nach einer Ruhepause des Fahrzeugs werden durch den Rechner die Endstellungen der Tür erkannt bzw. aufgenommen. Hierzu ist es nötig, daß zwei Spannungswerten bzw. der Linearweggeber 1, 2 die geöffnete bzw. geschlossene Stellung der Tür zugeordnet werden. Damit können die herkömmlichen Endschalter 11, 12 entfallen. Die Justage der Endstellungen erfolgt bei der erfindungsgemäßen Türsteuerung auf folgende Weise : Beim Einschalten der Türanlage wird zunächst mittels eines Druckschalters 20 geprüft, ob Druck vorhanden ist. Dies ist die Voraussetzung dafür, daß sich die Tür in einer Endstellung befindet. Damit kann der zugehörige Spannungswert des Linearweggebers gespeichert werden. Da der volle Drehwinkel der Tür annähernd bekannt ist, kann vor dem ersten Türlauf auch die andere Endstellung vorjustiert werden. Nach dem ersten Türlauf wird die Endstellung durch Messung nachjustiert, d. h. der alte Wert im Speicher mit dem genaueren Wert überschrieben. Eine Endstellung wird dabei erkannt durch die Bedungen « Druck vorhanden », und « keine Bewegung ».

Der Rechner kann weiterhin auch die ursprünglich gespeicherten Werte für die Norm-Türgeschwindigkeit in kleinen Schritten aktualisieren. Dies erfolgt durch Überschreiben des Speicherinhalts mit neuen Werten, falls Abweichungen zwischen tatsächlicher und gesteuerter Türgeschwindigkeit auftreten. Damit kann sich die Steuerung an veränderte kinematische Bedingungen anpassen. Treten jedoch plötzlich größere Abweichungen der Geschwindigkeiten auf, tritt wiederum die Überwachungsfunktion ein.

Bei einer ersten Belüftung der Anlage, wie auch bei einer Neubelüftung nach einer Nothahn-Betätigung, ist es üblich, zunächst über ein Drosselventil zu belüften (nicht dargestellt). Hierdurch soll ein Schlagen der Tür infolge fehlenden Gegendrucks in den Türzylindern 4, 5 verhindert werden. Die erste Türbewegung wird dadurch stark verlangsamt. Dieser Betriebszustand wird durch die Elektronik 3 zunächst mittels des Druckschalters 20 erkannt. Damit wegen der zu kleinen Türgeschwindigkeit die Überwachungsfunktion nicht fälschlich eingreift, enthält der Rechner einen zweiten Speicher, in dem die Nenntürgeschwindigkeiten für gedrosselte Belüftung enthalten sind. Damit läßt sich auch dieser Betriebszustand überwachen.

Durch die Intelligenz und Anpassungsfähigkeit der erfindungsgemäßen Türsteuerung ist es möglich, unter allen denkbaren Betriebsbedingungen eine zuverlässige und gleichzeitig kostengünstige Türkontrolle zu erzielen.

## Patentansprüche

1. Elektropneumatische Türsteuerung, insbesondere zur Steuerung von Türen in öffentlichen Verkehrsmitteln, welche der Personenbeförderung dienen, bei der die Türflügel durch pneumatische Türzylinder (4, 5) betätigt werden, die über ein durch elektrische Signale betätigbares, als Steuerventil ausgebildetes elektro-pneumatisches Türventil (9) beaufschlagt werden, gekennzeichnet durch folgende Merkmale :

a) zur Erkennung der Türstellung ist für jeden Türflügel ein mit diesem verbundener elektrischer Linearweggeber (1, 2) vorgesehen ;

b) aus den Ausgangssignalen der Linearweggeber (1, 2) werden in einer Elektronik (3), die einen Rechner enthält, Geschwindigkeits-, Verzögerungs- und Beschleunigungswerte der Türflügel gebildet ;

c) der Rechner enthält mindestens einen Speicher, in dem zu den erkannten Türstellungen die jeweiligen Norm-Türgeschwindigkeiten enthalten sind ;

d) der Rechner enthält eine Logik, welche bei einem zu großem Unterschreiten der Norm-Türgeschwindigkeit durch die tatsächliche Türgeschwindigkeit eine Überwachungsfunktion auslöst und die Signale der Elektronik (3) zu dem Türventil (9) leitet, welches die Türzylinder (4, 5) für die Türflügel entweder reversiert oder drucklos macht.

2. Türsteuerung nach Anspruch 1, dadurch gekennzeichnet, daß die Linearweggeber (1, 2) als Drehpotentiometer ausgebildet sind und auf einer Drehachse der Tür angebracht sind, oder als Linearpotentiometer ausgebildet sind und an den pneumatischen, Türzylindern (4, 5) de Tür angebracht sind.

3. Türsteuerung nach Anspruch 1 bis 2, dadurch gekennzeichnet, daß die Linearweggeber (1, 2) über Leitungen (17, 18, 19) mit einer Konstant-Spannung oder über Leitungen (15, 16) mit einem Konstant-Strom versorgt werden.

4. Türsteuerung nach Anspruch 1 bis 3, dadurch gekennzeichnet, daß der Rechner bei Erkennen einer zu hohen Verzögerung der Tür die Überwachungsfunktion auslöst.

5. Türsteuerung nach Anspruch 1 bis 4, dadurch gekennzeichnet, daß der Rechner bei Erkennen einer zu hohen Beschleunigung der Tür die Überwachungsfunktion kurzzeitig unwirksam schaltet.

6. Türsteuerung nach Anspruch 1 bis 5, dadurch gekennzeichnet, daß der Rechner die im Speicher enthaltenen Norm-Türgeschwindigkeiten in kleinen Schritten bei jedem Türlauf modifiziert, wenn geringe Abweichungen zur tatsächlichen Türgeschwindigkeit auftreten.

7. Türsteuerung nach Anspruch 1 bis 6, dadurch gekennzeichnet, daß der Rechner die Überwachungsfunktion auslöst, wenn nach einer bestimmten Zeit nach einer Umsteuerung der Tür eine Mindestgeschwindigkeit der Tür nicht erreicht ist.

8. Türsteuerung nach Anspruch 1 bis 7, dadurch gekennzeichnet, daß der Rechner mittels eines Signals aus einem Druckschalte (20) eine Druckbeaufschlagung der Anlage erkennt.

9. Türsteuerung nach Anspruch 1 bis 8, dadurch gekennzeichnet, daß der Rechner bei Vorliegen der Bedingungen « Druck vorhanden », aber « keine Bewegung », die Spannungswerte der Linearweggeber (1, 2) einer Endstellung der Tür zuordnet, und die andere Endstellung mittels der annähernd bekannten vollen Drehwinkels der Tür vorjustiert.

10. Türsteuerung nach Anspruch 9, dadurch gekennzeichnet, daß der Rechner die Endstellungen der Tür nach dem ersten Türlauf durch Messung nachjustiert.

11. Türsteuerung nach Anspruch 1 bis 10, bei der eine Wiederbelüftung nach einer Drucklosigkeit gedrosselt erfolgt, dadurch gekennzeichnet, daß der Rechner einen zweiten Speicher enthält, in dem die niedrigeren Norm-Türgeschwindigkeiten für gedrosselte Belüftung gespeichert sind.

## Claims

1. Electro-pneumatic door control, especially for controlling doors in public transport vehicles used for conveying passengers, in which the sections of the door are operated by pneumatic door cylinders (4, 5) which are charged by way of an electro-pneumatic door valve (9) constructed as a control valve an operable by electrical signals, characterised by the following features :

a) for the purpose of identifying the door position there is provided for each door section and connected thereto an electrical linear path indicator (1, 2) ;

b) from the output signals of the linear path indicator (1, 2) speed, delay and acceleration values of the door sections are produced in an electronic circuit (3) containing a computer ;

c) the computer contains at least one memory in which the individual standard door speeds for the identified door positions stored ;

d) the computer contains a logic circuit which triggers a monitor function when the actual door speed falls too far below the standard door speed, and passes the signals from the electronic circuit (3) to the door valve (9), which either reverses or removes the pressure from the door cylinders (4, 5) for the door sections.

2. Door control according to claim 1, characterised in that the linear path indicators (1, 2) are constructed as rotary potentiometers and are attached to a hinge axis of the door, or are constructed as linear potentiometers and are attached to the pneumatic cylinders (4, 5) of the door.

3. Door control according to claims 1 and 2, characterised in that the linear path indicators (1, 2) are supplied with constant voltage by way of lines (17, 18, 19) or with constant current by way of lines (15, 16).

4. Door control according to claims 1 to 3, characterised in that the computer triggers the monitor function when an excessively long delay in the movement of the door is detected.

5. Door control according to claims 1 to 4, characterised in that the computer disables the monitor function for a short time when excessive acceleration of the door is detected.

6. Door control according to claims 1 to 5, characterised in that the computer modifies the standard door speeds contained in the memory in small stages each time the door operates, if there are slight deviations from the actual door speed.

7. Door control according to claims 1 to 6, characterised in that the computer triggers the monitor function if a minimum door speed is not achieved after a certain time after the door is reversed.

8. Door control according to claims 1 to 7, characterised in that the computer detects the application of pressure to the system by means of a signal from a pressure switch (20).

9. Door control according to claims 1 to 8, characterised in that under the conditions « pressure present », but « no movement », the computer assigns the voltage values from the linear path indicators (1, 2) to one end position of the door, and pre-sets the others end position by means of the approximately known full angle of rotation of the door.

10. Door control according to claim 9, characterised in that the computer re-sets the end positions of the door after the first time the door operates, in response to measurement.

11. Door control according to claims 1 to 10 in which re-pressurization after an absence of pressure is effected in a trottled manner, characterised in that the computer contains a second memory in which the lower standard door speeds for throttled pressurization are stored.

## Revendications

1. Commande de porte électropneumatique, en particulier pour la commande de portes de moyens de transports publics qui servent au transport des personnes, dans laquelle les ouvrants de la porte sont actionnés par des vérins de porte pneumatiques (4, 5) qui sont alimentés par l'intermédiaire d'une vanne de porte électropneumatique (9), réalisée sous la forme d'un distributeur et qui peut être actionnée par des signaux électriques, caractérisé par les caractéristiques suivantes :

a) pour la détection de la position de la porte, il est prévu pour chaque ouvrant de la porte un capteur de course linéaire électrique (1, 2) relié à cet ouvrant ;

b) à partir des signaux de sortie de capteurs de course linéaires (1, 2), il se forme dans un dispositif électronique (3) qui comprend un ordinateur, des valeurs de vitesse, décélération et accélération des ouvrants de la porte ;

c) l'ordinateur comprend au moins une mémoire dans laquelle sont contenues, pour les positions reconnues de la porte, les vitesses normales correspondantes de la porte ;

d) l'ordinateur comprend une logique qui, dans le cas où la vitesse réelle de la porte est trop fortement inférieure à la vitesse normale de la porte, déclenche une fonction de surveillance et transmet les signaux du dispositif électronique (3) à la vanne de porte (9), laquelle, soit inverse, soit rend inopérants les vérins de porte (4, 5) qui commandent les ouvrants de la porte.

2. Commande de porte selon la revendication 1, caractérisée en ce que les capteurs de course linéaires (1, 2) sont constitués par des potentiomètres tournants et sont montés sur un axe de rotation de la porte, ou bien sont constitués par des potentiomètres linéaires et sont montés sur les vérins pneumatiques (4, 5) de la porte.

3. Commande de porte selon l'une des revendications 1 et 2, caractérisée en ce que les capteurs de course linéaires (1, 2) sont alimentés avec une tension constante par l'intermédiaire de conducteurs (17, 18, 19) ou avec une intensité constante par l'intermédiaire de conducteurs (15, 16).

4. Commande de porte selon les revendications 1 à 3, caractérisée en ce que, lorsqu'il détecte une décélération trop élevée de la porte, l'ordinateur déclenche une fonction de surveillance.

5. Commande de porte selon les revendications 1 à 4, caractérisée en ce que, lorsqu'il détecte une accélération trop élevée de la porte, l'ordinateur rend la fonction de surveillance inopérante pendant un temps bref.

6. Commande de porte selon les revendications 1 à 5, caractérisée en ce que, à chaque manœuvre de la porte, l'ordinateur modifie par petits pas les vitesses normales de porte contenues dans la mémoire lorsqu'ils se présentent de petits écarts par rapport à la vitesse réelle de la porte.

7. Commande de porte selon les revendications 1 à 6, caractérisée en ce que l'ordinateur déclenche la fonction de surveillance lorsqu'on n'a pas atteint une vitesse minimale de la porte après écoulement d'un temps déterminé à la suite d'une inversion de la commande de la porte.

8. Commande de porte selon les revendications 1 à 7, caractérisée en ce que l'ordinateur détecte l'alimentation de l'installation en pression au moyen d'un signal émis par un commutateur manométrique (20).

9. Commande de porte selon les revendications 1 à 8, caractérisé en ce qu'en présence des conditions « pression présente » mais « aucun mouvement », l'ordinateur associe les valeurs des tensions du capteur de course linéaire (1, 2) à une position finale de la porte et prérègle l'autre position finale sur la base de l'angle de rotation total de la porte, qui est connu approximativement.

10. Commande de porte selon la revendication 9, caractérisée en ce que l'ordinateur corrige le réglage des positions finales de la porte après le premier mouvement de la porte, par une mesure.

11. Commande de porte selon les revendications 1 à 10, dans laquelle la réalimentation après une perte de la pression se produit avec étranglement, caractérisée en ce que l'ordinateur comprend une deuxième mémoire dans laquelle sont mémorisées les plus faibles vitesses normales de la porte pour l'alimentation étranglée.

FIG. 1

FIG. 2